# EUROPÄISCHE PATENTSCHRIFT

(11) **EP 0 941 875 B1**
(45) Veröffentlichungstag und Bekanntmachung des Hinweises auf die Patenterteilung: **04.06.2003**
(21) Anmeldenummer: 99100747.7
(22) Anmeldetag: 16.01.1999
(51) Int. Cl.: B60G 3/20, B60G 7/02, B60G 13/00, B60G 15/06, B60G 3/26

(54) **Radaufhängung**
Wheel suspension
Suspension de roue

(30) Priorität: 12.03.1998 DE 19810664
(43) Veröffentlichungstag der Anmeldung: 15.09.1999
(73) Patentinhaber: Dr.Ing. h.c.F. Porsche Aktiengesellschaft, 70435 Stuttgart (DE)
(72) Erfinder: Schote, Norbert, 72119 Ammerbuch (DE); Luger, Martin, 71287 Weissach (DE)

(56) Entgegenhaltungen:
- DE-A- 4 010 184
- GB-A- 983 684
- US-A- 4 583 759
- US-A- 4 705 292
- US-A- 5 094 472
- US-A- 5 382 044

## Beschreibung

Die Erfindung bezieht sich auf eine Radaufhängung, insbesondere für eine Vorderachse eines Kraftfahrzeugs, mit einer oberen Lenkerebene aus zwei Querlenkern bestehend nach dem Oberbegriff des Anspruchs 1.

Aus der DE 40 10 184 A1 ist eine Radaufhängung in Doppelquerlenkerbauweise bekannt, bei der die obere Lenkerebene zwei Querlenker umfaßt, die an einem Halter angelenkt sind. Dieser stützt sich am Fahrzeugaufbau ab. Innerhalb des Halters ist ein Abstützelement für eine Spiralfeder des Federbeines vorgesehen.

Die gattungsbildende US 5,382,044 A zeigt eine Befestigungsvorrichtung für eine Vorderachsaufhängung, die ein karosseriefest angeordnetes Lagerelement aufweist. Dieses Lagerelement ist mit einem Lager für eine Kolbenstange eines Federbeins und einem Federteller für die Spiralfeder des Federbeines versehen. Ferner sind an dem Lagerelement seitlich Abstellungen vorgesehnen, die Lagerungen für einen oberen Querlenker der Radaufhängung tragen. Das Lagerelement ist über zwei Führungsstifte und vier an den Ecken des Lagerelementes angeordnete Schrauben mit der Karosserie fest verbunden.

Aufgabe der Erfindung ist es, eine Radaufhängung zu schaffen, deren obere Lenkerebene in einfacher Bauweise an einem aufbauseitig gehaltenen Element anlenkbar ist und darüber hinaus eine Verstellung des Lenkers zur Radeinstellung möglich wird.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß an einem aufbauseitig gehaltenen topfförmigen Lagerelement sowohl der Querlenker als auch das Federbein über die Kolbenstange und die Spiralfeder gehalten bzw. gelagert sind. Gleichzeitig kann über ein Einstellelement am Lagerelement der Sturz des Rades über die Querlenker eingestellt werden.

Das topfförmige Lagerelement ist hierzu am unteren Rand als Federteller ausgebildet, weist außenseitig Lageranformungen zur Aufnahme für die Querlenker auf und ist innenseitig mit einer Lagermöglichkeit für die Kolbenstange versehen. Die Verbindung zum Fahrzeugaufbau erfolgt vorzugsweise über zwei elastische Lager im Bereich des Federtellers und kann über eine weitere Verbindung am Kopf des Lagerelements erfolgen. Diese Verbindung bildet ein Einstellelement für den Sturz des Rades, wobei insbesondere durch die beiden elastischen Lager eine etwa horizontale Drehachse für das topfförmige Lagerelement gebildet wird, um die eine Einstellung des Radsturzes erfolgt.

Das topfförmige Lagerelement kann erfindungsgemäß auch ohne Einstellelement verwendet werden, wobei dann nur die Querlenker und die Kolbenstange und die Spiralfeder gelagert sind. Dieses Lagerelement kann mit dem Querlenker, dem Feberbein und der Spiralfeder als vormontierte Baueinheit verwendet werden.

Die untere Lenkerebene umfaßt mindestens einen Querlenker, wobei ebenfalls zwei Querlenker zur Bildung eines Pols verwendet werden können. Das Feder/Dämpferbein stützt sich an einem Querlenker ab.

Die obere und die untere Lenkerebene umfaßt divergierend angeordnete obere und untere Querlenker, die aufgelöst angeordnet und an einem Querträger gelagert sind. Sie bilden jeweils vor und/oder hinter einer senkrechten Radmittenquerebene Pole für die Radgeometrie.

Ein Ausführungsbeispiel der Erfindung ist in den Zeichnungen dargestellt und wird im folgenden näher beschrieben.

Es zeigen
- Fig. 1: eine Draufsicht einer Radaufhängung mit unteren und oberen Querlenkern,
- Fig. 2: eine Ansicht auf ein topfförmiges Lagerelement für die oberen Querlenker in Fahrtrichtung F gesehen,

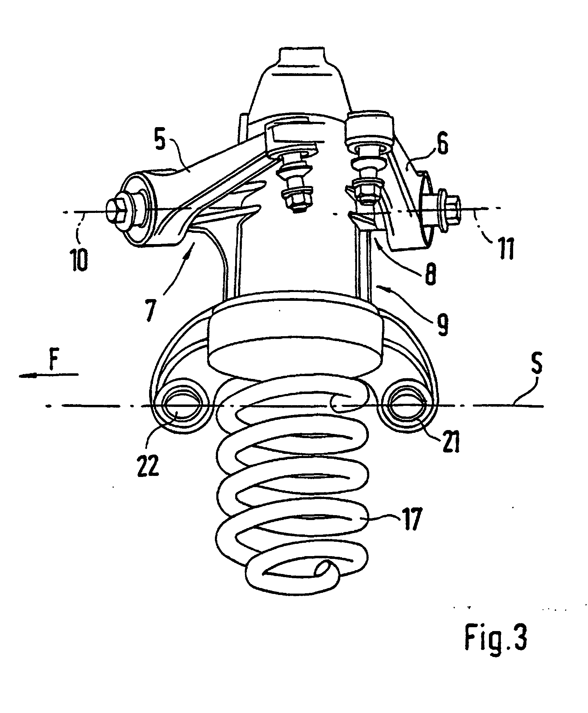

- Fig. 3: eine Ansicht auf das topfförmige Lagerelement in Pfeilrichtung Z gesehen,

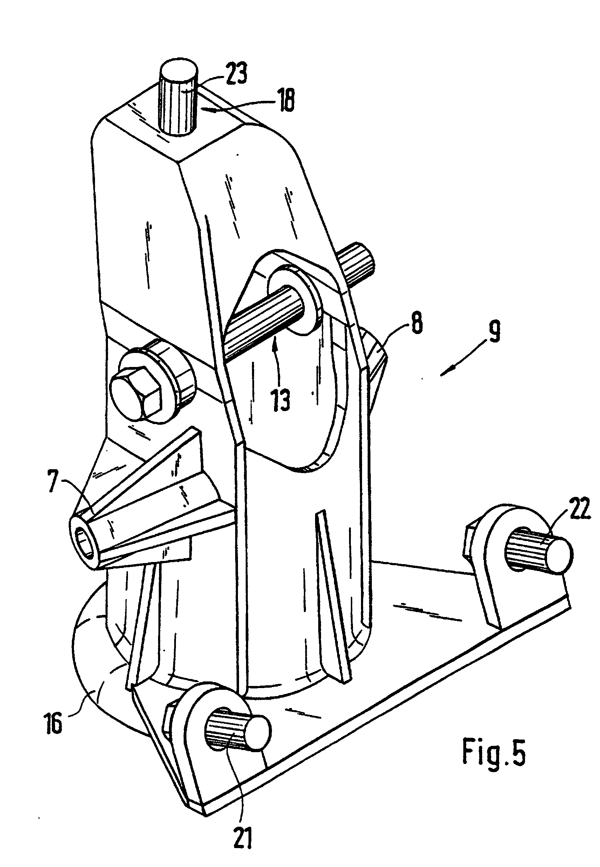

- Fig. 4: eine Draufsicht auf das topfförmige Lagerelement,
- Fig. 5: eine schaubildliche Darstellung des topfförmigen Lagerelements,

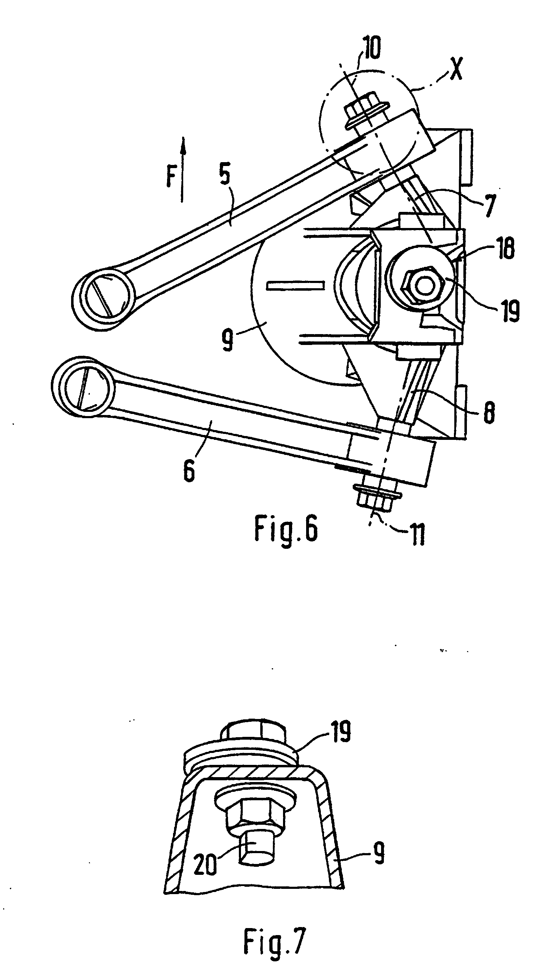

- Fig. 6: eine Draufsicht auf das topfförmige Lagerelement mit Einstellelement und
- Fig. 7: eine vergrößerte Darstellung X des Einstellelements in einer Seitenansicht.

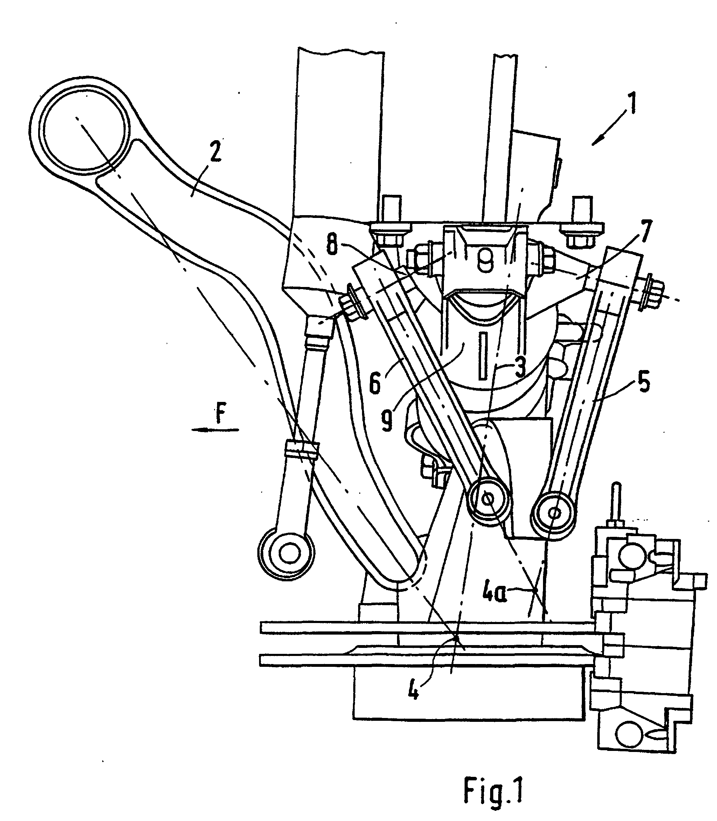

Wie in Fig. 1 näher dargestellt, besteht die Radaufhängung 1, insbesondere eine Vorderradaufhängung, aus einer unteren Lenkerebene mit zwei aufgelösten Querlenkern 2, mit einem Pol 4. Die obere Lenkerebene umfaßt ebenfalls zwei aufgelöste Querlenker 5, mit einem Pol 4a, die in Lagern 7, des topfförmigen Lagerelements 9 um Achsen 10, 11 schwenkbar angelenkt sind. Die abgekehrten Enden der Querlenker 2, 3 und 5, 6 sind an einem Radträger 12 gehalten.

Das topfförmige Lagerelement 9 weist außenseitig Anformungen für die Lagerungen 7, 8 der Querlenker 5, 6, eine weitere Lagerung 13 für eine Kolbenstange 14 des Feder/Dämpferbeines 15 sowie ein Federteller 16 zur Abstützung für eine Spiralfeder 17 auf. Desweiteren ist im Kopf des Lagerelements 9 ein Einstellelement 18 nach Art einer Exzenterscheibe 19 angeordnet. Die Verbindung des Lagerelements 9 mit einem Fahrzeugaufbau 24 erfolgt über Befestigungen 21, 22 bzw. 23, wobei die Befestigungen 21, 22 elastische Lagerelemente aufweisen.

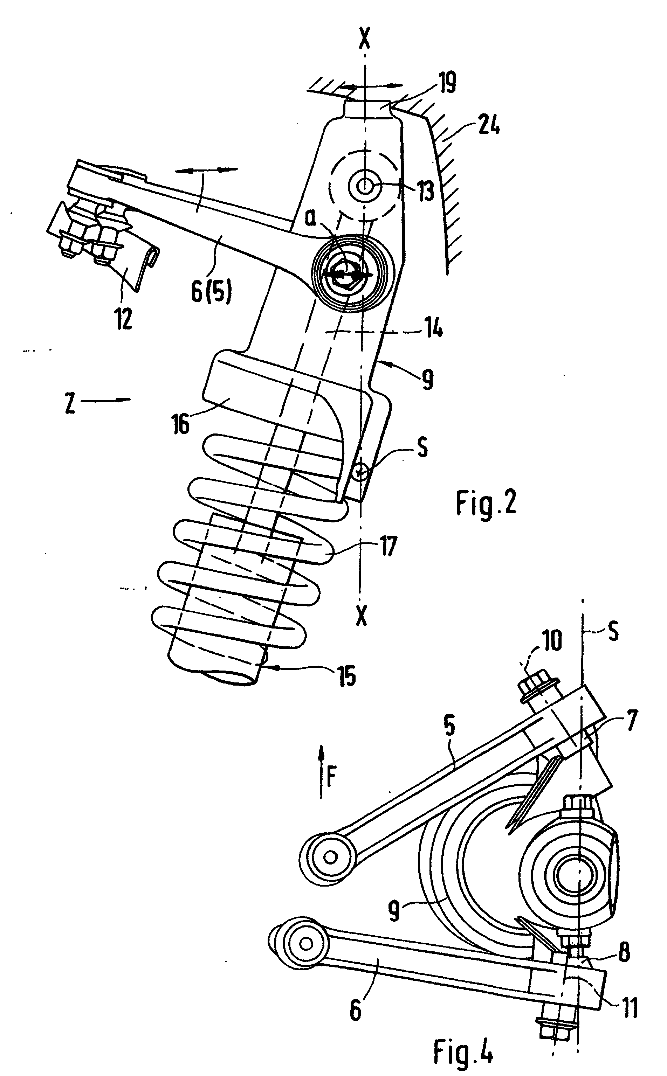

Die elastischen Befestigungen 21, 22 bilden eine Schwenkachse S, die etwa horizontal angeordnet und etwa parallel zur Fahrzeuglängsmittenachse des Fahrzeugs verläuft. Um diese Achse S verschwenkt sich das Lagerelement 9 bei einer Verstellung über die Exzenterscheibe 19 des Einstellelements 18. Die Exzenterscheibe 19 ist über eine Einstellschraube 20 verdrehbar und stützt sich am Aufbau in einer entsprechenden Öffnung oder einer anderen Einrichtung ab, so daß bei einem Verdrehen der Exzenterscheibe 19 sich das Lagerelement 9 um die Achse S mit dem Weg a verschieben kann (Fig. 2). Hierdurch werden die Querlenker 5, 6 in Querrichtung des Fahrzeugs verlagert, so daß eine Sturzverstellung einstellbar ist.

Die Lager 7, 8 für die Querlenker 5, 6 am Lagerelement 9 sind unterhalb und vor der Lagerung 13 für die Kolbenstange 14 angeordnet. Das Kolbenstangen-Lager 13 liegt etwa in einer gemeinsamen senkrechten Ebene X-X mit der Schwenkachse S des topfförmigen Lagerelements 9.

Das Lagerelement 9 kann aus einem umfangseitig geschlossenen Topf bestehen, wobei der untere Rand den Federteller 16 bildet. Es ist erfindungsgemäß aber auch möglich, dieses Lagerelement 9 als Trägerteil mit einer Rippenstruktur in teilweise oder ganz geöffneter Form auszubilden. Die Materialien, aus denen das Lagerelement hergestellt ist, können aus einem Metall oder Kunststoff bestehen.

## Patentansprüche

1. Radaufhängung, insbesondere für eine Vorderachse eines Kraftfahrzeugs mit einer oberen Lenkerebene aus zwei Querlenkern (5,6) bestehend und einer unteren Lenkerebene mit mindestens einem Querlenker (3), wobei ein Federbein (15) am unteren Lenker (3) abgestützt ist und in einem topfförmigen Lagerelement (9) Lagerungen für die Querlenker (5,6) ein Lager (13) für eine Kolbenstange (14) des Federbeins (15) und eine Lagerung (16) für eine Spiralfeder (17) angeordnet sind, **dadurch gekennzeichnet, daß** das Lagerelement (9) über ein SturzEinstellelement (18) um eine Drehachse (S) verschwenkbar am Fahrzeugaufbau (24) gehalten ist.

2. Radaufhängung nach Anspruch 1, **dadurch gekennzeichnet, daß** das topfförmige Lagerelement (9) an seinem unteren Öffnungsrand einen ausgeformten Federteller (16) für die Spiralfeder (17) bildet, an dem außenseitig Befestigungsaugen (7, 8) für elastische Lagerelemente angeordnet sind.

3. Radaufhängung nach den Ansprüchen 1 oder 2, **dadurch gekennzeichnet, daß** die Drehachse (S) durch elastische Lagerelemente (21,22) etwa parallel zur Fahrzeuglängsmittenachse angeordnet ist und das Lager (13) des Federbeines (15) im topfförmigen Lagerelement (9) etwa in einer gemeinsamen senkrechten Ebene (X-X) mit der Drehachse (S) liegt.

4. Radaufhängung nach den Ansprüchen 1, 2 oder 3, **dadurch gekennzeichnet, daß** das topfförmige Lagerelement (9) im Kopf seines oberen freien Endes als Einstellelement (18) eine Exzenterscheibe (19) aufweist, die mit einer Verstellschraube (20) verbunden ist, und die Exzenterscheibe (19) gegenüber dem Fahrzeugaufbau verdrehbar ist und die Querlenker (5, 6) auf einem Weg (a) einstellbar sind.

5. Radaufhängung nach Anspruch 4, **dadurch gekennzeichnet, daß** die Lager (7, 8) der Querlenker (5, 6) in einem Abstand zur senkrechten Ebene (X-X) angeordnet sind und eine Sturzverstellung um den Weg (a) über die Exzenterscheibe (19) einstellbar ist.

6. Radaufhängung nach einem oder mehreren der vorhergehenden Ansprüchen, **dadurch gekennzeichnet, daß** die untere Lenkerebene zwei aufgelöste Querlenker (2, 3) umfaßt, wobei an einem hinteren Querlenker (3) - in Fahrtrichtung F gesehen - das Federbein (15) abgestützt ist.

7. Radaufhängung nach einem oder mehreren der vorhergehenden Ansprüche, **dadurch gekennzeichnet, daß** das topfförmige Lagerelement (9) zwei außenliegende Lagerungen (7, 8) für die Querlenker (5,6), eine innenliegende Lagerung (13) für die Kolbenstange (14) eines Feder/Dämpferbeines (15) sowie dem Federteller (16) für eine obere Abstützung der Spiralfeder (17) aufweist und daß das Lagerelement (9) mit dem Fahrzeugaufbau über mindestens zwei Befestigungen (21, 22) verbunden ist.

## Claims

1. A wheel suspension, in particular for a front axle of a motor vehicle with an upper control-arm plane comprising two transverse control arms (5, 6) and a lower control-arm plane with at least one transverse control arm (3), wherein a suspension strut (15) is supported on the lower control arm (3), and mountings for the transverse control arms (5, 6), a bearing (13) for a piston rod (14) of the suspension strut (15) and a mounting (16) for a spiral spring (17) are arranged in a cup-shaped bearing member (9), **characterized in that** the bearing member (9) is held on the vehicle body (24) so as to be pivotable about an axis of rotation (**S**) by way of a camber-adjustment member (18).

2. A wheel suspension according to Claim 1, **characterized in that** on its lower opening edge the cup-shaped bearing member (9) forms a projecting spring plate (16) for the spiral spring (17), fastening lugs (7, 8) for resilient bearing members being arranged on the said spring plate (16) on the outside.

3. A wheel suspension according to Claim 1 or 2, **characterized in that** the axis of rotation (S) is arranged [extending] through resilient bearing members (21, 22) substantially parallel to the longitudinal median axis of the vehicle, and the bearing (13) of the suspension strut (15) in the cup-shaped bearing member (9) is situated substantially in a common vertical plane (**X-X**) with the axis of rotation (**S**).

4. A wheel suspension according to Claim 1, 2 or 3, **characterized in that** in the head of its upper free end the cup-shaped bearing member (9) has an eccentric disc (19) as an adjustment member which is connected to an adjusting screw (20), and the eccentric disc (19) is rotatable with respect to the vehicle body and the transverse control arms (5, 6) can be adjusted on a path (**a**).

5. A wheel suspension according to Claim 4, **characterized in that** the bearings (7, 8) of the transverse control arms (5, 6) are arranged at a distance from the vertical plane (**X-X**), and a camber adjustment can be set on the path (**a**) by way of the eccentric disc (19).

6. A wheel suspension according to one or more of the preceding Claims, **characterized in that** the lower control-arm plane comprises two detached transverse control arms (2, 3), wherein the suspension strut (15) is supported on a rear transverse control arm (3) as viewed in the direction of travel **F**.

7. A wheel suspension according to one or more of the preceding Claims, **characterized in that** the cup-shaped bearing member (9) comprises two mountings (7, 8) situated on the outside for the transverse control arms (5, 6), one mounting (13) situated on the inside for the piston rod (14) of a spring-and-shock-absorber strut (15) and the spring plate (16) for an upper support of the spiral spring (17), and the bearing member (9) is connected to the vehicle body by way of at least two fastenings (21, 22).

## Revendications

1. Suspension de roue, destinée notamment à un essieu avant d'un véhicule à moteur, comprenant un plan de bras supérieur avec deux bras oscillants transversaux (5, 6), et un plan de bras inférieur avec au moins un bras oscillant transversal (3), une jambe de force à ressort (15) s'appuyant sur le bras inférieur (3), et des logements pour les bras oscillants transversaux (5, 6), un appui (13) pour une bielle (14) de la jambe de force à ressort (15) et un logement (16) pour un ressort à spirales (17), étant disposés dans un élément de logement (9) en forme de pot **caractérisée en ce que** l'élément de logement (9) est maintenu sur la structure du véhicule (24) pivotant autour d'un axe de rotation (S) à l'aide d'un élément de réglage de carrossage (18).

2. Suspension de roue selon la revendication 1, **caractérisé en ce que** l'élément de logement (9) en forme de pot présente, sur son bord d'ouverture inférieur, une coupelle de ressort (16) configurée pour le ressort à spirales (17), sur la surface extérieure de laquelle des oeillets de fixation (7, 8) sont disposés pour des éléments de logement élastiques.

3. Suspension de roue selon les revendications 1 ou 2, **caractérisée en ce que** l'axe de rotation (S) est disposé de manière sensiblement parallèle à l'axe central longitudinal du véhicule à l'aide d'éléments de logement élastiques (21, 22), et **en ce que** l'appui (13) de la jambe de force à ressort (15) est placé avec l'axe de rotation (S) dans l'élément de logement (9) en forme de pot sensiblement dans un plan vertical commun (X-X).

4. Suspension de roue selon les revendications 1, 2 ou 3, **caractérisée en ce que** l'élément de logement (9) en forme de pot, dans la tête de son extrémité supérieure libre, présente un disque de l'excentrique (19) servant d'élément de réglage (18), qui est relié à une vis d'ajustement (20), et **en ce que** le disque de l'excentrique (19) est pivotant par rapport à la structure du véhicule, et **en ce que** les bras oscillants transversaux (5, 6) sont réglables sur une course (a).

5. Suspension de roue selon la revendication 4, **caractérisée en ce que** les paliers (7, 8) des bras oscillants transversaux (5, 6) sont disposés à une distance du plan vertical (X-X), et **en ce qu'**un ajustement de carrossage au niveau de la course (a) peut être réglé à l'aide du disque excentrique (19).

6. Suspension de roue selon l'une ou plusieurs des revendications précédentes, **caractérisée en ce que** le plan de bras inférieur comprend deux bras oscillants transversaux (2, 3) décomposés, la jambe de force à ressort (15) s'appuyant sur un bras oscillant transversal (3) arrière - vu dans le sens du déplacement F.

7. Suspension de roue selon l'une ou plusieurs des revendications précédentes, **caractérisée en ce que** l'élément de logement (9) en forme de pot présente deux paliers extérieurs (7, 8) pour les bras oscillants transversaux (5, 6), un appui intérieur (13) pour la bielle (14) d'une jambe de force à ressort/amortisseur (15) et pour la coupelle de ressort (16) pour un appui supérieur du ressort à spirales (17), et **en ce que** l'élément de logement (9) est relié à la structure du véhicule à l'aide d'au moins deux fixations (21, 22).
